Europäisches Patentamt

European Patent Office

Office européen des brevets

(11) Veröffentlichungsnummer: **0 257 272**
**A1**

## (12) EUROPÄISCHE PATENTANMELDUNG

(21) Anmeldenummer: 87110133.3

(22) Anmeldetag: **14.07.87**

(51) Int. Cl.4: **F16L 7/00**

(30) Priorität: **22.08.86 DE 3628586**

(43) Veröffentlichungstag der Anmeldung:
**02.03.88 Patentblatt 88/09**

(84) Benannte Vertragsstaaten:
**ES FR GB IT**

(71) Anmelder: **DORNIER GMBH**
**Postfach 1420**
**D-7990 Friedrichshafen 1(DE)**

(72) Erfinder: **Kramer, Bernhard**
**Paracelsusstrasse 39**
**D-7778 Markdorf(DE)**

(74) Vertreter: **Landsmann, Ralf, Dipl.-Ing.**
**DORNIER GMBH - Patentabteilung - Kleeweg 3**
**D-7990 Friedrichshafen 1(DE)**

(54) **Radial-Stossdämpfer.**

(57) Die Erfindung betrifft eine Vorrichtung zur Dämpfung radialer Stöße und Schwingungen eines runden Körpers gegenüber einem radialen Festlager, wobei zwischen den beiden Führungsringen (2, 12) mindestens ein wellenartig vorgeformtes Dämpfungselement (18) aus Draht oder Blech vorgesehen ist, das aus Federstahl (17) besteht und neben der radialen Dämpfungswirkung auch eine radiale Zentrierung und eine Fixierung in axialer Richtung ermöglicht.

Fig.1

EP 0 257 272 A1

## Radial-Stoßdämpfer

Die Erfindung betrifft eine Vorrichtung zur Dämpfung radial auftretender Schwingungen und Stöße eines beliebigen runden Körpers, bei dem gleichzeitig durch das schwingungsaufnehmende Element eine Zentrierung und Fixierung zueinandergehörender Bauteile erfolgt.

In der Technik sind Stoßdämpfer unterschiedlichster Art bekannt. So können beispielsweise Schwingungen und Stöße durch Gasdruckdämpfer, Öldruckdämpfer oder durch Kompression eines eingeschlossenen Luftpolsters verringert werden. Die Verwendung von Gummibauteilen oder die Lagerung schwingender Teile in Gummielementen bewirkt ebenfalls eine Dämpfung. Ineinanderliegende Rohre werden durch formgepreßte Drahtkissengeflechte, die zwischen den beiden Rohren eingelegt werden, gegeneinander - schwingungsdämpfend abgestützt. Diese Drahtgeflechte sind in ihrer Herstellung aufwendig und kostspielig. Eine Fixierung in axialer Richtung läßt sich mit ihnen nicht vornehmen.

Der Erfindung liegt die Aufgabe zugrunde, eine Dämpfungsvorrichtung für ineinanderliegende Ringe, Rohre oder Hülsen zu finden, die es ermöglicht, auftretende Stöße und Schwingungen aufzunehmen und abzumildern.

Die Aufgabe wird durch die Vorrichtung nach Hauptanspruch gelöst. Ausgestaltungen sind Bestandteile von Unteransprüchen.

Bei zwei ineinanderliegenden Ringen sollen auftretende Stöße und Schwingungen aufgenommen und abgedämpft werden. Dabei kann sowohl der innere Ring Stöße und Schwingungen erleiden und auf den äußeren Ring übertragen, als auch der innere Ring durch den äußeren Ring mit Schwingungen und Stößen beaufschlagt werden. Um die Schwingungen und Stöße abzudämpfen, werden Dämpfungselemente aus Federstahl zwischen Außen-und Innenring eingezogen. Als Dämpfungselemente werden eine oder mehrere wellenförmig gebogene Drähte mit beliebigen Querschnittsformen oder ein oder mehrere wellenförmig gebogene Blechstreifen aus Federstahl verwendet. Durch die Dicke, die Qualität des Federstahls und die Anzahl der verwendeten Dämpfungselemente läßt sich die Steifigkeit der Anordnung in weiten Bereichen variieren. Bei der Verwendung von Drähten sollen vorzugsweise wenigstens zwei Drähte vorhanden sein, um ein Verkippen oder Verkanten des inneren Ringes zu vermeiden. Bei der Verwendung eines Blechstreifens reicht ein Streifen in genügender Breite aus. Neben der Dämpfung radial auftretender Schwingungen und Stöße, eignet sich die Vorrichtung auch zur radialen Zentrierung zweier Bauteile zueinander. Durch die Anpassung der Vertiefung, in der die Drähte oder Blechstreifen liegen, einerseits und der Drähte oder Blechstreifen andererseits, wird eine axiale Fixierung und somit eine Verhinderung axialen Spiels erreicht. Eine Vergrößerung der Anzahl der verwendeten Drähte oder Blechstreifen bewirkt ebenfalls eine Erhöhung der Steifigkeit in axialer Richtung.

Werden mehrere (n) Drähte oder Blechstreifen verwendet, so sind die Einführungsöffnungen im Außenring vorzugsweise um 360°/n versetzt anzuordnen.

Länge und Durchmesser der Ringe sind vom verwendeten Material und der Form und Anzahl der Drähte oder Blechstreifen abhängig. So lassen sich auch Hülsen und Rohre dämpfen, zentrieren und fixieren.

Durch die Verwendung einfacher und kostengünstiger Drähte und Blechstreifen aus Federstahl, kann der Herstellungspreis eines radialen Stoß-und Schwingungsdämpfers gegen über herkömmlichen Methoden reduziert werden.

Die Erfindung wird anhand von Figuren näher erläutert.

Es zeigen:

Figur 1 eine Draufsicht auf zwei erfindungsgemäß gedämpfte Ringe mit herausgebrochenem Schnitt in der Einführungsöffnung,

Figur 2 eine Seitenansicht mit Schnitt in der Wandung,

Figur 3 eine Seitenansicht nach Figur 2 unter Verwendung eines Wellenblechstreifens.

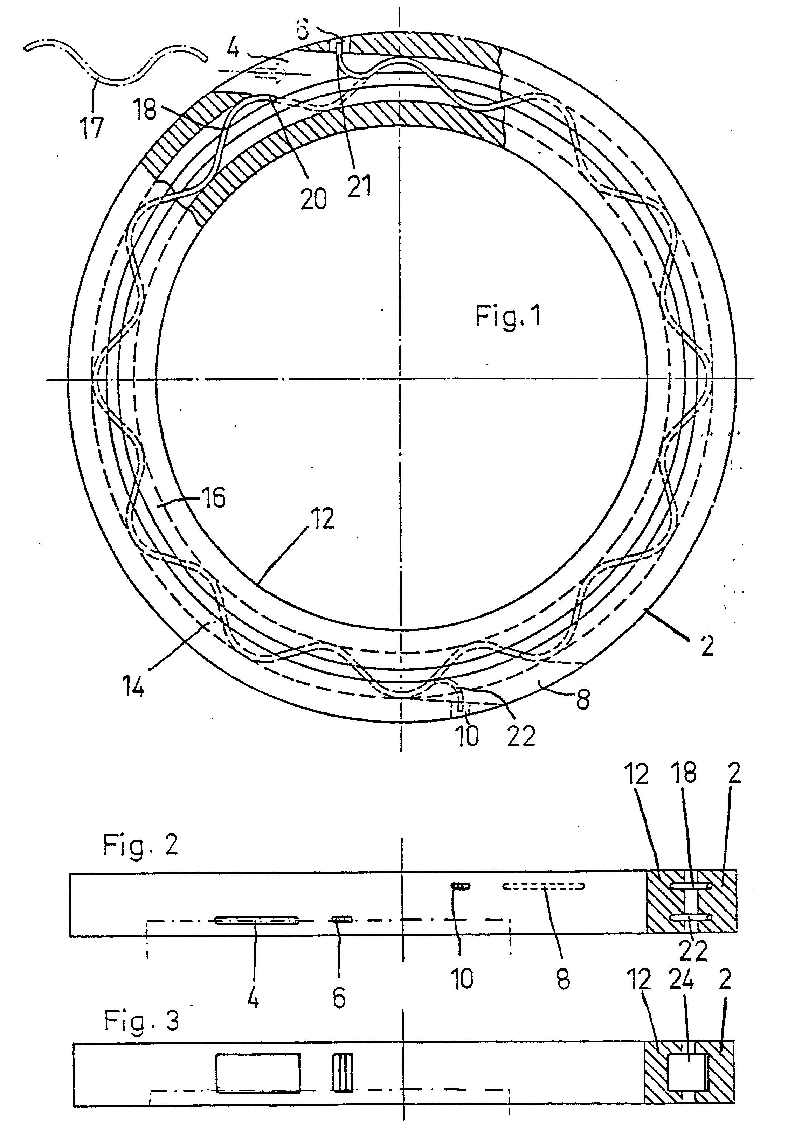

Figur 1 zeigt den Außenring 2 mit der Einführungsöffnung 4 und der Drahtendenbefestigungsbohrung 6. Um 180° versetzt dazu befindet sich, andeutungsweise dargestellt, eine zweite Öffnung 8 mit einer zweiten Drahtendenbefestigung 10. In den Außenring 2 und den Innenring 12 sind dem Drahtprofil entsprechende Vertiefungen 14 und 16 eingearbeitet. Durch die Öffnung 4 wird ein wellenförmig vorgebogener Federstahldraht 17 und 18 zwischen Innenring 12 und Außenring 2 eingeschoben und kommt in der Vertiefung 14 und 16 zu liegen. Der Draht 18 steht dabei in eingebautem Zustand unter definierter Vorspannung. Der Anfang 20 des Drahtes 18 liegt im Endzustand vor der Öffnung 4. Das Ende 21 des Drahtes 18 wird in die Drahtendenbefestigungsbohrung 6 eingelegt. Durch die zweite Öffnung 8 wird ein weiterer Draht 22 in gleicher Weise eingeführt und befestigt. Das Schnittbild in Figur 1 zeigt, dass beide Drähte 18 und 22 deckungsgleich übereinanderliegen, aber auch beliebiger Versatz der Drähte oder Bleche ist möglich.

Figur 2 zeigt eine Seitenansicht, bei der eine Hälfte geschnitten dargestellt ist. Zwischen Außenring 2 und und Innenring 12 liegen die beiden Drähte 18 und 22 nebeneinander. Ebenfalls sind die Einführungsöffnungen 4 und 8 und die Befestigungsbohrungen 6 und 10 zu erkennen.

Figur 3 zeigt die Seitenansicht aus Figur 2, in der die Drähte durch einen wellenförmigen Blechstreifen 24 ersetzt sind. Die Einführungsöffnung 4 und die Befestigungsbohrung 6 liegen im linken Teil der Figur.

**Ansprüche**

1. Vorrichtung zur Dämpfung radialer Stöße und Schwingungen eines runden Körpers gegenüber einem sich in ihm oder um ihn befindlichen radialen Festlager, **dadurch gekennzeichnet**, dass zwischen Innenring (12) und Außenring (2) wenigstens ein wellenartig vorgeformtes Dämpfungselement (18, 22, 24) vorgesehen ist.

2. Vorrichtung nach Anspruch 1, dadurch gekennzeichnet, dass das wellenförmige Dämpfungselement ein Draht (18) aus Federstahl ist.

3. Vorrichtung nach Anspruch 1, dadurch gekennzeichnet, dass das wellenförmige Dämpfungselement ein Blechstreifen (24) aus Federstahl ist.

4. Vorrichtung nach einem der Ansprüche 1 bis 3, dadurch gekennzeichnet, dass die Länge eines Dämpfungselementes (18, 22, 24) geringer ist als der äußere Umfang der Vertiefung (14), in der es liegt.

5. Vorrichtung nach einem der Ansprüche 1 bis 4, dadurch gekennzeichnet, dass die Öffnungen (4, 8) zur Einführung der Dämpfungselemente (18, 22, 24) im Außenring (2) angeordnet sind.

6. Vorrichtung nach einem der Ansprüche 1 bis 5, dadurch gekennzeichnet, dass die n Öffnungen zur Einführung der n Dämpfungselemente im Außenring vorzugsweise um 360°/n verschoben angeordnet sind.

Fig.1

Fig. 2

Fig. 3

## EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (Int. Cl.4) |
|---|---|---|---|
| X | FR-A-2 547 642  (NIRA S.p.A.) <br> * Ansprüche 1,3; Figur 5 * <br> --- | 1,3 | F 16 L    7/00 |
| A | DE-A-3 005 005  (GOETZE AG) <br> * Ansprüche 1,6; Figur 1 * <br> --- | 1,3 | |
| A | DE-A-2 546 123  (THYSSEN PLASTIK ANGER KG) <br> * Ansprüche 1-3; Figuren 1-4 * <br> --- | 1,3,5 | |
| A | DE-C-  966 298  (H. RAACKE) <br> * Anspruch 1; Figuren 1-6 * <br> --- | 1,2,4-6 | |
| A | FR-A-1 161 972  (ATOMIC ENERGY OF CANADA LTD) <br> * Figuren 1,2 * <br> ----- | 5,6 | |

**RECHERCHIERTE SACHGEBIETE (Int. Cl.4)**

F 16 F
F 16 L
F 01 N

Der vorliegende Recherchenbericht wurde für alle Patentansprüche erstellt

| Recherchenort | Abschlußdatum der Recherche | Prüfer |
|---|---|---|
| DEN HAAG | 30-10-1987 | SINGER G.M. |